(19) Europäisches Patentamt
European Patent Office
Office européen des brevets

(11) **EP 3 340 001 A1**

(12) **EUROPEAN PATENT APPLICATION**

(43) Date of publication:
**27.06.2018 Bulletin 2018/26**

(51) Int Cl.:
*G05D 1/02* (2006.01)    *G09B 23/10* (2006.01)

(21) Application number: **16205515.6**

(22) Date of filing: **20.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Bayerische Motoren Werke Aktiengesellschaft**
**80809 München (DE)**

(72) Inventors:
• **Korus, Jan-Dominik**
  **80935 München (DE)**
• **Wagner, Sebastian**
  **81549 München (DE)**

(54) **DEVICE FOR MEASURING THE INFLUENCE OF A SENSOR SIGNAL OF A VEHICLE**

(57)    A device for measuring the influence of a sensor signal is suggested. The device comprises a learning module (1, 2, 3, 4, 5, 6) for receiving a plurality of learn input signals ($S_1$, $S_2$) for a plurality of defined driving maneuvers ($M_1$, ..., $M_{NR}$) and for transforming the dynamic and dependent learn input signals ($S_1$, $S_2$) into static and independent signals for generating a mapping function (5), an influence determination module (9) for generating simulated sensor signals of a vehicle and for transmitting the simulated sensor signals to the mapping function (5), wherein the mapping function (5) is adapted to reduce the simulated sensor signals to realistically occurring sensor signals and to transform the simulated sensor signals into dynamic and dependent sensor signals ($S'_1$, $S'_2$), and a simulation module (7) for simulating the driving maneuver ($M_1$, ..., $M_{NR}$) of the vehicle, wherein the influence determination module (9) determines the influence of at least one of the dynamic and dependent sensor signals ($S'_1$, $S'_2$) to a deviation of a target value (R) to an actual value (A) of an output signal of the vehicle associated with a driving maneuver ($M_1$, ..., $M_{NR}$) of the vehicle.

Fig. 3

**Description**

The present invention relates to a device for measuring the influence of a sensor signal of a vehicle to a deviation of a target value to an actual value of an output signal of the vehicle associated with a driving maneuver of the vehicle. Further, the present invention relates to a method for measuring the influence of a sensor signal of a vehicle to a deviation of a target value to an actual value of an output signal of the vehicle associated with a driving maneuver of the vehicle.

Due to test expenditure, validating highly automated driving functions in simulations will be indispensable. In simulations, highly complex models are used which make standard approaches inefficient. To increase the performance in simulations one has to improve the performance of the simulation models. For efficient reduction of model complexity, it is necessary to identify the most significant signals. In a second approach, it is mandatory to know the influence of the most significant signals to determine the impact they have on the autonomous vehicle's accuracy in driving. By knowing the major influencing signal's requirements for the system and the sensors, measuring these signals can be derived. Reversed, by known requirements of the accuracy of sensors, one can resolve if the vehicle will move in tolerance limits.

It is one object of the present invention to provide an improved approach for measuring the influence of signals to determine the impact they have on the autonomous vehicle's accuracy in driving.

Accordingly, a device for measuring the influence of a sensor signal of a vehicle to a deviation of a target value to an actual value of an output signal of the vehicle associated with a driving maneuver of the vehicle is suggested. The device comprises a learning module being adapted to receive a plurality of learn input signals for a plurality of defined driving maneuvers, wherein the plurality of learn input signals are dynamic and dependent, wherein the learning module is further adapted to transform the dynamic and dependent learn input signals into static and independent signals for generating a mapping function, an influence determination module being adapted to generate simulated sensor signals of a vehicle, the simulated sensor signals being static and independent, and to transmit the simulated sensor signals to the mapping function, wherein the mapping function is adapted to reduce the simulated sensor signals to realistically occurring sensor signals and to transform the simulated sensor signals into dynamic and dependent sensor signals, and a simulation module being adapted to receive the transformed simulated sensor signals and to simulate the driving maneuver of the vehicle, wherein the influence determination module is further adapted to receive an output signal of the simulation module and to determine the influence of at least one of the dynamic and dependent sensor signals to a deviation of a target value to an actual value of the output signal of the simulation module which corresponds to an output signal of the vehicle associated with a driving maneuver of the vehicle.

The suggested device is based on the idea to measure the influence of a signal using sensitivity analysis to get information about a system's input signals. Thus, using the suggested device, it is possible to identify the most significant signals in complex dynamic systems. The influence of the dynamic input signals on the dynamic output signals may be quantified.

In known systems, a sensitivity analysis is used to solve similar problems, but is not applicable to dynamic signals (only static parameters) and when dependencies between inputs occur. However, as dependencies are present due to physical relations between the signals and as the dependencies are nonlinear, the known methods for sensitivity analysis may not provide correct output information.

In the suggested device, dynamic and dependent input signals are first converted into static and independent signals for generating a mapping function. During the simulation process itself, this mapping function may be used to reduce simulated sensor signals to realistically occurring sensor signals and to transform the simulated sensor signals into dynamic and dependent sensor signals. Thus, correct output information may be generated as the simulated sensor signals, which dependent on each other, may be varied for testing in a realistic way which means that only variations of signals are generated which could also occur in real life.

Such a device may be used in driver assistance systems. Reducing the simulated signals to realistic signals leads to an improved simulation, which in turn improves the security of a driver assistance system. Further, the required computing resources and time may be reduced.

The mapping function may be generated for a plurality of driving maneuvers. The plurality of driving maneuvers refers to the same driving maneuver but with varying characteristics. For example, a driving maneuver could be a weaving motion of a vehicle, which may occur for example during lane changing. The varying characteristics could be a speed, curvature, yaw rate, lateral acceleration, longitudinal acceleration, steering angle, etc.

If a different driving maneuver should be simulated, a new mapping function may be generated for this driving maneuver.

It should be noted that the respective modules or units, e.g. the determination module, may be implemented in hardware and/or in software. If said module or unit is implemented in hardware, it may be embodied as a device, e.g. as a computer or as a processor or as a part of a system, e.g. a computer system. If said module or unit is implemented in software it may be embodied as a computer program product, as a function, as a routine, as a program code or as an executable object.

Further, the device may be implemented as a distributed computer system, wherein the several modules may be arranged remotely or locally.

According to an embodiment, the influence determination module is adapted to change the simulated sensor signals and to transmit the changed simulated sensor signals to the mapping function.

The simulation module may be used to simulate a plurality of variations of the driving maneuver for which the mapping function was generated. The variations may include inter alia variations of a speed, a curvature, an acceleration or any other kind of variation being applicable in a driving maneuver.

According to a further embodiment, the mapping function is adapted to reduce the changed simulated sensor signals to realistically occurring deviations of the sensor signals.

When a first sensor signal is changed, a second sensor signal being dependent on the first sensor signal should also be changed, but in a way which is realistic. This can be achieved using the mapping function. The mapping function may exclude deviations or variations of the second sensor signal which make no sense in combination with the variation of the first sensor signal. Thus, only variations which realistically occur together may pass the mapping function.

According to a further embodiment, the learning module comprises a first unit for transforming the plurality of dynamic and dependent learn input signals into static and dependent learn input signals by defining base points for each learn input signal.

A fixed number K of base points P may be defined for each learn input signal. The more base points are chosen, the more accurate the signals can be projected in a following hierarchical nonlinear principal component analysis but the more time consuming the process will be. By defining base points, the dynamic learn input signals are converted into static learn input signals as each signals will afterwards consist of a plurality of static points being provided in a vector. For example, for signals $S_1$ to $S_L$, the base points may be vectorized to

$$x(nR) = \left[ P_{1,S_1}, \dots, P_{K,S_1}, P_{1,S_2}, \dots, P_{K,S_2}, \dots, P_{1,S_{KL}}, \dots, P_{K,S_L} \right]$$

$$\forall nR \in \{1, \dots, NR\}.$$

Afterwards, NR training vectors are available for further processing.

According to a further embodiment, the learning module comprises a second unit for transforming the plurality of static and dependent learn input signals into static and independent learn input signals using a hierarchical nonlinear principal component analysis (HNLPCA).

The hierarchical nonlinear principal component analysis (HNLPCA) may be implemented using a neural network, for example a neural multilayer perceptron. The neural multilayer perceptron may be constructed using $N_L * N_K$ inputs and outputs and $N_C$ components neurons in the component layer. The number of neurons in the encoder and decoder layer is free to choose but needs to be equal. The more neurons are used the more complex dependencies between the base points can be learned. The number of components $N_C$ should be less than the size of the vector x(nR). The less components are used the better is the decorrelation but the lower becomes the networks mapping accuracy.

According to a further aspect, a method for measuring the influence of a sensor signal of a vehicle to a deviation of a target value to an actual value of an output signal of the vehicle associated with a driving maneuver of the vehicle is suggested. The method comprises the following steps: receiving a plurality of learn input signals for a plurality of defined driving maneuvers, wherein the plurality of learn input signals are dynamic and dependent, transforming the dynamic and dependent learn input signals into static and independent signals for generating a mapping function, generating simulated sensor signals of a vehicle, the simulated sensor signals being static and independent, transmitting the simulated sensor signals to the mapping function, reducing the simulated sensor signals in the mapping function to realistically occurring sensor signals, transforming the simulated sensor signals into dynamic and dependent sensor signals, receiving the transformed simulated sensor signals, simulating the driving maneuver of the vehicle, determining the influence of at least one of the dynamic and dependent sensor signals to a deviation of a target value to an actual value of the output signal of the simulation module which corresponds to an output signal of the vehicle associated with a driving maneuver of the vehicle.

According to an embodiment, the method may be carried for example on a device as described above for measuring the influence of a sensor signal of a vehicle to a deviation of a target value to an actual value of an output signal of the vehicle associated with a driving maneuver of the vehicle as described above.

In a further embodiment, the method may be carried out on a distributed computer system, which may consist of a plurality of computer system parts, remotely or locally arranged.

The embodiments and features described with reference to the device of the present invention apply mutatis mutandis to the method of the present invention.

According to a further aspect, the invention relates to a computer program product comprising a program code for executing the above-described method for measuring the influence of a sensor signal of a vehicle to a deviation of a target value to an actual value of an output signal of the vehicle associated with a driving maneuver of the vehicle when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1 shows a schematic view of a driving maneuver;

Fig. 2 shows a base point extraction (BPE) of a signal of the driving maneuver of Fig. 1; and

Fig. 3 shows a schematic block diagram of a device for measuring the influence of a sensor signal according to an embodiment of the invention.

In the Figures, like reference numerals designate like or functionally equivalent elements, unless otherwise indicated.

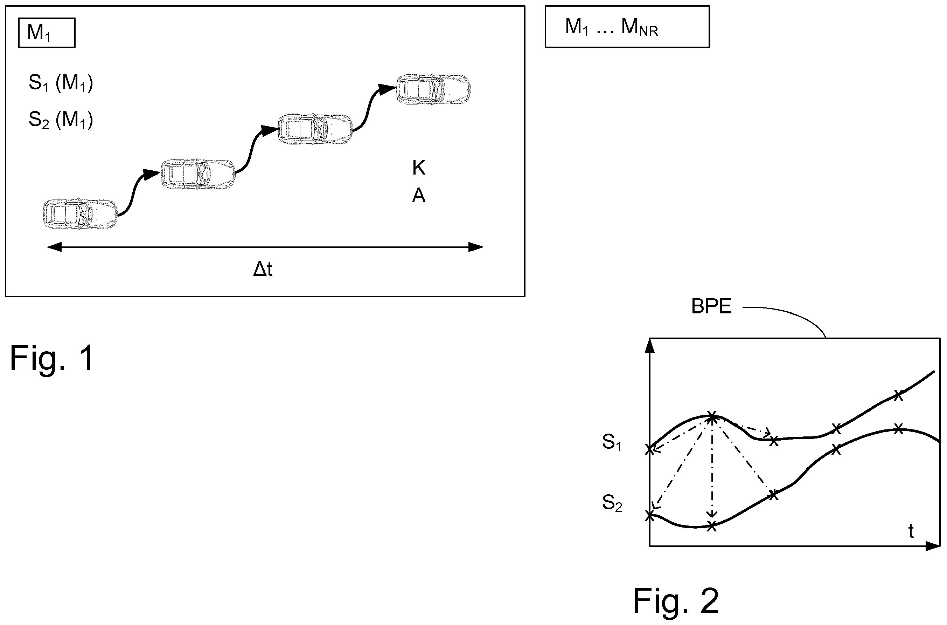

As shown in Fig. 1, one kind of driving maneuver M may be considered, which may be a weaving maneuver. For one kind of driving maneuver M, a plurality of driving maneuvers $M_1 ... M_{NR}$ may be considered, which differ in their parameters. In Fig. 1, driving maneuver $M_1$ is shown which consists of three weaves, for example due to a lane change. This means that a vehicle, for example a car, makes three weaving or movements. The driving maneuver $M_1$ is carried out for a time $\Delta t$. During this time, a plurality of sensor signals Sj may be generated. In Fig. 1 and the following figures, only two signals $S_1$ and $S_2$ are exemplary shown, i.e. the signals $S_1(M_1)$ and $S_2(M_1)$. These signals $S_1$ and $S_2$ are generated for each driving maneuver $M_1 ... M_{NR}$.

For the driving maneuver M, a target value R may be defined, which may be for example a vehicles trajectory. During the driving maneuver $M_1$, an actual value A may be measured. Optimally, R should be equal to A.

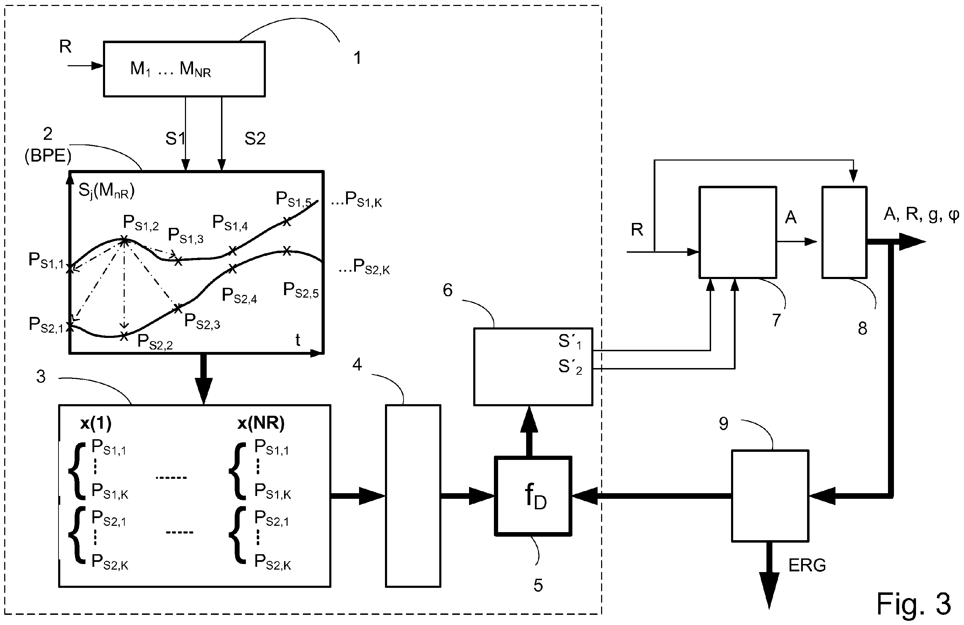

A device for measuring the influence of a sensor signal $S_1$, $S_2$ of a vehicle to a deviation of the target value R to the actual value A of an output signal of the vehicle associated with a driving maneuver M of the vehicle is shown in Fig. 3.

The device comprises a learning module consisting of a generating unit 1, a first unit 2, a vector unit 3, a second unit 4, a mapping function 5 and a transformation unit 6. The device further comprises a simulation module 7, an influence determination module 9 and a post processing unit 8.

In the generating unit 1, a set of reference simulations of closed loop maneuvers is generated. The sensitivities calculated later are always with reference to the spectrum of simulations chosen here. The number of reference simulations is named $N_R$. Thus, in the generating unit 1, the maneuvers $M_1 ... M_{NR}$ are generated.

As a result, dynamic and dependent learn input signals $S_1$ and $S_2$ are forwarded to the first unit 2. In the first unit 2, the plurality of dynamic and dependent learn input signals $S_1$ and $S_2$ are transformed into static and dependent learn input signals by defining base points P for each learn input signal.

A fixed number K of base points P are defined on all learn input signals. The base points are exemplarily shown for two signals in Fig. 2: The base point extractions are then vectorized in the vector unit 3 to

$$x(nR) = \left[ P_{1,S_1}, ..., P_{K,S_1}, P_{1,S_2}, ..., P_{K,S_2}, ..., P_{1,S_{KL}}, ..., P_{K,S_L} \right]$$

$$\forall nR \in \{1, ..., NR\}.$$

Now $N_R$ training vectors are available for training the neural network used in the second unit 4.

In the second unit 4, the plurality of static and dependent learn input signals $S_1$, $S_2$ are transformed into static and independent learn input signals using a hierarchical nonlinear principal component analysis.

The second unit 4 may be implemented as a neural multilayer perceptron which may be constructed using $N_L * N_K$ inputs and outputs and $N_C$ components neurons in the component layer. The number of neurons in the encoder and decoder layer is free to choose but needs to be equal. The more neurons are used the more complex dependencies between the base points can be learned. The number of components $N_C$ should be less than the size of the vector $x(n_R)$. The less components are used the better is the decorrelation but the lower becomes the networks mapping accuracy.

As a result, a mapping function 5 ($f_D$) is generated which is adapted to reduce simulated sensor signals to realistically occurring sensor signals and to transform the simulated sensor signals into dynamic and dependent sensor signals.

This means that the influence determination module 9 may generate simulated sensor signals $S_1$, $S_2$ and may vary or change these sensor signals $S_1$, $S_2$ as static and independent signals which are then transmitted to the mapping function 5 for generating dynamic and dependent signals $S'_1$ and $S'_2$ in the transformation unit 6.

These signals $S'_1$ and $S'_2$ are then forwarded to the simulation module 7 together with the target value R. The simulation module 7 may then simulate the driving maneuver M and may output the actual value A. In the post processing unit 8, the actual value A may be separated into several information like amplitude gain g or phase shift $\varphi$.

These information may be forwarded to the influence determination module 9 which may vary the signals $S_1$ and $S_2$ based on this information for receiving further data and which determines the influence of at least one of the dynamic and dependent sensor signals $S'_1$ and $S'_2$ to a deviation of the target value R to the actual value A.

The influence determination module 9 may also output a result ERG of the simulation, which may include information about the influence of at least one of the dynamic and dependent sensor signals $S_1$, $S_2$ to a deviation of the target value R to the actual value A.

**Claims**

1.  A device for measuring the influence of a sensor signal of a vehicle to a deviation of a target value (R) to an actual value (A) of an output signal of the vehicle associated with a driving maneuver ($M_1$,..., $M_{NR}$) of the vehicle, the device comprising

    a learning module (1, 2, 3, 4, 5, 6) being adapted to receive a plurality of learn input signals ($S_1$, $S_2$) for a plurality of defined driving maneuvers ($M_1$, ..., $M_{NR}$) wherein the plurality of learn input signals ($S_1$, $S_2$) are dynamic and dependent, wherein the learning module (1, 2, 3, 4, 5, 6) is further adapted to transform the dynamic and dependent learn input signals ($S_1$, $S_2$) into static and independent signals for generating a mapping function (5),

    an influence determination module (9) being adapted to generate simulated sensor signals of a vehicle, the simulated sensor signals being static and independent, and to transmit the simulated sensor signals to the mapping function (5), wherein the mapping function (5) is adapted to reduce the simulated sensor signals to realistically occurring sensor signals and to transform the simulated sensor signals into dynamic and dependent sensor signals ($S'_1$, $S'_2$), and

    a simulation module (7) being adapted to receive the transformed simulated sensor signals ($S'_1$, $S'_2$) and to simulate the driving maneuver ($M_1$, ..., $M_{NR}$) of the vehicle,

    wherein the influence determination module (9) is further adapted to receive an output signal (A) of the simulation module (7) and to determine the influence of at least one of the dynamic and dependent sensor signals ($S'_1$, $S'_2$) to a deviation of a target value (R) to an actual value (A) of the output signal of the simulation module (7) which corresponds to an output signal of the vehicle associated with a driving maneuver of the vehicle.

2.  The device according to claim 1,

    wherein the influence determination module (9) is adapted to change the simulated sensor signals and to transmit the changed simulated sensor signals to the mapping function (5).

3.  The device according to claim 2,

    wherein the mapping function (5) is adapted to reduce the changed simulated sensor signals to realistically occurring deviations of the sensor signals.

4.  The device according to one of claims 1 to 3,

    wherein the learning module (1, 2, 3, 4, 5, 6) comprises a first unit (2) for transforming the plurality of dynamic and dependent learn input signals ($S_1$, $S_2$) into static and dependent learn input signals by defining base points for each learn input signal ($S_1$, $S_2$).

5.  The device according to one of claims 1 to 4,

    wherein the learning module (1, 2, 3, 4, 5, 6) comprises a second unit (4) for transforming the plurality of static and dependent learn input signals into static and independent learn input signals using a hierarchical nonlinear principal component analysis.

6.  A method for measuring the influence of a sensor signal of a vehicle to a deviation of a target value (R) to an actual value (A) of an output signal of the vehicle associated with a driving maneuver of the vehicle, the method comprising

    receiving a plurality of learn input signals ($S_1$, $S_2$) for a plurality of defined driving maneuvers ($M_1$, ..., $M_{NR}$), wherein the plurality of learn input signals ($S_1$, $S_2$) are dynamic and dependent,

    transforming the dynamic and dependent learn input signals ($S_1$, $S_2$) into static and independent signals for generating a mapping function (5),

generating simulated sensor signals of a vehicle, the simulated sensor signals being static and independent,

transmitting the simulated sensor signals to the mapping function (5),

reducing the simulated sensor signals in the mapping function (5) to realistically occurring sensor signals,

transforming the simulated sensor signals into dynamic and dependent sensor signals ($S'_1$, $S'_2$),

receiving the transformed simulated sensor signals,

simulating the driving maneuver ($M_1$, ..., $M_{NR}$) of the vehicle,

determining the influence of at least one of the dynamic and dependent sensor signals ($S'_1$, $S'_2$) to a deviation of a target value (R) to an actual value (A) of the output signal of the simulation module (7) which corresponds to an output signal of the vehicle associated with a driving maneuver of the vehicle.

EP 3 340 001 A1

$M_1$

$M_1 \ldots M_{NR}$

$S_1 (M_1)$

$S_2 (M_1)$

K
A

$\Delta t$

## Fig. 1

BPE

$S_1$

$S_2$

t

## Fig. 2

Fig. 3

EP 3 340 001 A1

Europäisches
Patentamt

European
Patent Office

Office européen
des brevets

# EUROPEAN SEARCH REPORT

Application Number

EP 16 20 5515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GYS MEIRING ET AL: "A Review of Intelligent Driving Style Analysis Systems and Related Artificial Intelligence Algorithms", SENSORS, vol. 15, no. 12, 4 December 2015 (2015-12-04), pages 30653-30682, XP055305360, CH ISSN: 1424-8220, DOI: 10.3390/s151229822 * the whole document * | 1-6 | INV. G05D1/02 G09B23/10 |
| X | US 2015/306761 A1 (O'CONNOR PETER [US] ET AL) 29 October 2015 (2015-10-29) * paragraphs [0058] - [0205]; figure 3B * | 1-6 | |
| X | CN 104 268 625 A (UNIV HARBIN ENG) 7 January 2015 (2015-01-07) * abstract * | 1-6 | |
| X | EP 2 610 836 A1 (SEAT SA [ES]) 3 July 2013 (2013-07-03) * paragraphs [0002] - [0019] * | 1-6 | TECHNICAL FIELDS SEARCHED (IPC) G05D G09B |

The present search report has been drawn up for all claims

| Place of search | Date of completion of the search | Examiner |
|---|---|---|
| Munich | 17 March 2017 | Díaz de Lezana, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 5515

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2017

| Patent document cited in search report | | Publication date | Patent family member(s) | | Publication date |
|---|---|---|---|---|---|
| US 2015306761 | A1 | 29-10-2015 | NONE | | |
| CN 104268625 | A | 07-01-2015 | NONE | | |
| EP 2610836 | A1 | 03-07-2013 | EP 2610836 | A1 | 03-07-2013 |
| | | | ES 2411629 | A2 | 05-07-2013 |
| | | | ES 2535689 | T3 | 13-05-2015 |

EPO FORM P0459

For more details about this annex : see Official Journal of the European Patent Office, No. 12/82